# EUROPÄISCHE PATENTSCHRIFT

(11) **EP 0 431 498 B1**
(45) Veröffentlichungstag und Bekanntmachung des Hinweises auf die Patenterteilung: **15.09.1993**
(21) Anmeldenummer: 90123027.6
(22) Anmeldetag: 01.12.1990
(51) Int. Cl.: C02F 7/00, C02F 3/20

(54) **Vorrichtung zur Begasung von Gewässern**
Device for introducing gas into bodies of water
Dispositif d'introduction de gaz dans les eaux

(30) Priorität: 05.12.1989 DE 3940110
(43) Veröffentlichungstag der Anmeldung: 12.06.1991
(73) Patentinhaber: Linde Aktiengesellschaft, 65189 Wiesbaden (DE)
(72) Erfinder: Blaschek, Reimut, Dipl.-Ing. (FH), W-8192 Geretsried 2 (DE); Ziemann, Georg, Dipl.-Ing., W-8025 Unterhaching (DE)
(74) Vertreter: Schaefer, Gerhard, Dr.

(56) Entgegenhaltungen:
- AT-A- 377 743
- DE-A- 3 319 276
- DE-C- 930 424
- FR-A- 2 398 024

## Beschreibung

Die Erfindung betrifft eine Vorrichtung zur Begasung von Gewässern mit auf einem Auftriebskörper montierten Begasungselementen, die unterhalb der Gewässeroberfläche angeordnet sind.

Es ist bekannt, zur Sanierung von Gewässern technischen Sauerstoff in das Gewässer einzutragen, um den Anteil an gelöstem Sauerstoff im Wasser zu erhöhen. Oftmals ist eine Flächenbegasung zweckmäßig, d.h. der Sauerstoff wird im wesentlichen gleichmäßig über eine bestimmte Grundfläche verteilt in das Gewässer eingetragen. Zu diesem Zweck verwendet man üblicherweise auf dem Gewässerboden verlegte Begasungsmatten, die aus einem Stahlrahmen bestehen, auf dem perforierte Begasungsschläuche montiert sind. Eine derartige Anordnung ist z.B. in "Abwassertechnik, Heft 3/1987, S. 29-32" beschrieben.

Das bekannte Begasungssystem weist den Nachteil auf, daß bei Vorhandensein einer Schlammschicht auf dem Gewässergrund, ein Großteil des eingetragenen Sauerstoffs von der Schlammschicht aufgezehrt wird, so daß für die eigentliche Begasung des Wassers weniger Sauerstoff zur Verfügung steht. Des weiteren wird der Schlamm beim bekannten Begasungssystem aufgewirbelt, wodurch ein erhöhtes Rücklösen von sauerstoffzehrenden Stoffen begünstigt wird. Außerdem folgt die Position der Begasungsmatten der Topographie des Gewässerbodens, so daß aufgrund verschiedener Neigungswinkel der Begasungsmatten die Sauerstoffversorgung des Wassers ungleichmäßig ist.

Die DE-C-930 424 betrifft eine Vorrichtung zum Belüften von Gewässern, bei der Belüftungskörper auf einem Schlitten montiert sind, der als Schwimmkörper ausgebildet ist. Der Schlitten ist mit Einrichtungen versehen, die es gestatten, den Schwimmkörper oder Teile davon zu fluten, so daß man den Schwimmkörper absenken oder aufsteigen lassen kann. Der Schlitten wird an einem Stahlseil hinter einem Schiff hergezogen. Der Schlitten ist also nicht an einem bestimmten Ort im Gewässer fixiert, sondern wird mit dem Schiff durch das Gewässer bewegt. Bleibt das Schiff stehen, so kann der Schlitten mit der Gewässerströmung so weit abdriften, wie das Stahlseil reicht. Die Belüftungskörper sind nicht näher definiert.

Aus der AT-A-377 743 ist eine Vorrichtung zur Belüftung von Gewässern bekannt, die eine Wasserstrahlpumpe aufweist, deren Ausströmungsdüse sich unter dem Wasserspiegel des Gewässers befindet und die Umgebungsluft ansaugt. Der Ausströmungsstrahl der Wasserstrahlpumpe ist in eine kanalartig geformte, fein perforierte Hülle hineingerichtet, die unter dem Wasserstrahl angeordnet ist und einen Teilbereich des Gewässers umgibt. Die fein perforierte Hülle dient dazu, die Lebensdauer der kleinen Luftbläschen zu verlängern. Außerdem ergibt sich beim Hindurchtreten der kleinen Luftbläschen durch die fein perforierte Hülle eine Intensivierung des Kontaktes der Luft mit dem Wasser. Die Hülle ist nach oben hin von einer gleichfalls unter dem Wasserspiegel angeordneten Haube aus luftdichtem Material überdeckt. Die Haube und die darunter angeordnete fein perforierte Hülle sind an einem Schwimmkörper angebracht, der mehrere flutbare Kammern aufweist. Auch diese Vorrichtung weist keinerlei Einrichtungen auf, die eine ortsfeste Installation der Belüftungseinrichtung ermöglichen.

Schließlich ist aus der FR-A-2 398 024 eine Belüftungsvorrichtung bekannt, bei der Belüftungsrohre im Gewässer schwebend angeordnet sind. Die Belüftungsrohre hängen an einem Auftriebskörper, der auf der Gewässeroberfläche schwimmt. Der Auftriebskörper ist mittels eines Seiles mit einer auf dem Gewässergrund liegenden Beschwerung verbunden und kann somit an einem festen Ort gehalten werden. Nachteilig ist jedoch, daß durch den auf der Gewässeroberfläche schwebenden Auftriebskörper und die auf dem Gewässergrund liegende Beschwerung sowie das beide Einrichtungen verbindende Seil insgesamt ein vom Gewässergrund bis zur Gewässeroberfläche reichendes Hindernis im Gewässer geschaffen wird, das z.B. den Schiffsverkehr behindert.

Der vorliegenden Erfindung liegt die Aufgabe zugrunde, eine Vorrichtung der eingangs genannten Art so zu gestalten, daß die genannten Nachteile nicht auftreten.

Diese Aufgabe wird erfindungsgemäß dadurch gelöst, daß der Auftriebskörper als Rahmen aus dichtgeschweißten Hohlprofilen ausgebildet ist, der derart mit einer zentralen Beschwerung versehen ist, daß er im Gewässer über dem Gewässerboden schwebt, und die Begasungselemente als Begasungsschläuche ausgebildet sind.

Durch die schwebende Anordnung der Begasungsschläuche ergeben sich vielfache Vorteile:

Die Begasung kann in jeder Gewässertiefe vorgenommen werden, so daß gezielt bestimmte Gewässerbereiche begast werden können. Üblicherweise liegt auf dem Gewässergrund eine sehr stark sauerstoffzehrende Schlammschicht, die mehrere Meter betragen kann. Bei Verwendung der herkömmlichen auf dem Gewässerboden verlegten Begasungsmatten geht ein Großteil des eingetragenen Gases an die Schlammschicht verloren. Außerdem wird durch Aufwirbelung des Schlamms ein Rücklösen von sauerstoffzehrenden Stoffen begünstigt. Die erfindungsgemäße Vorrichtung bietet dagegen die Möglichkeit, die Begasungsschläuche auf einfache Weise oberhalb der Schlammschicht anzuordnen, so daß das gesamte eingetragene Gas für die Begasung des Wassers zur Verfügung steht. Dies wirkt sich insbesondere bei der Sauerstoffbegasung von Gewässern positiv aus. Der Ausnutzungsgrad des Sauerstoffs kann deutlich erhöht werden, da kein Sauerstoff an die Sauerstoffzehrende Schlammschicht verloren geht. Da die Begasungsschläuche nicht auf dem Gewässergrund verlegt sind, ist die Anordnung der Begasungsschläuche darüberhinaus unabhängig von der Beschaffenheit des Gewässergrundes. Die Begasungsschläuche können immer so angeordnet werden, daß sie waagerecht im Wasser schweben. Die erfindungsgemäße Vorrichtung ist auch bei sehr großen Einheiten leicht transportierbar. Der Rahmen ist zweckmäßigerweise zusammenlegbar und die Begasungsschläuche sind vorzugsweise leicht vom Rahmen lösbar ausgebildet, so daß die Vorrichtung am Lande schnell von einem Einsatzort zum anderen transportiert werden kann. Außerdem kann die Vorrichtung auch im Wasser leicht von einer Begasungsstelle zur nächsten schwimmend befördert werden. Die Begasungsvorrichtung ist schnell einsetzbar, da sie leicht zusammengebaut und vor Ort einfach im Wasser abgesenkt werden kann.

Die Hohlprofile des Rahmens sind zum Beispiel als Rund-oder Rechteckprofile ausgebildet. Der Rahmen bildet beispielsweise ein Quadrat oder Rechteck, das eine Seilbespannung aufweist, auf der die Begasungsschläuche zweckmäßigerweise parallel in gleichen Abständen verlegt sind. Die Beschwerung ist zweckmäßigerweise auf dem Gewässerboden angeordnet und ist mit Seilen am Rahmen befestigt. Als Beschwerung kann beispielsweise eine Stahlkugel oder ein Betonquader dienen. Falls der Rahmen in quadratischer oder rechteckiger Form ausgebildet ist, wird die Beschwerung vorteilhafterweise mit vier gleichlangen Seilen an den vier Ecken des Rahmens befestigt. Die Höhe des Rahmens über dem Gewässergrund bzw. der Schlammschicht kann durch die Länge der Seile bestimmt werden. Bevorzugt ist der Rahmen oberhalb der Schlammschicht derart angeordnet, daß die Begasungsschläuche waagerecht im Wasser schweben. Auf diese Weise wird eine optimale Versorgung des Wassers mit dem eingetragenen Gas erreicht.

Die erfindungsgemäße Vorrichtung eignet sich insbesondere zum Sauerstoffeintrag in Gewässer, beispielsweise zur Sanierung von Seen und Flüssen oder zur Abwasseraufbereitung in Stapelteichen. Anstelle von Sauerstoff kann gegebenenfalls aber auch ein anderes Gas in das Wasser eingetragen werden. Beispielsweise kann zur Förderung von Denitrifikationsvorgängen Wasserstoff in das Wasser eingeblasen werden. Auch eine Ozonisierung des Wassers ist mit der erfindungsgemäßen Vorrichtung möglich.

Möglich ist auch ein Eintrag von gasförmigem CO₂ zur Neutralisation von alkalischen Gewässern und Abwasserstapelteichen.

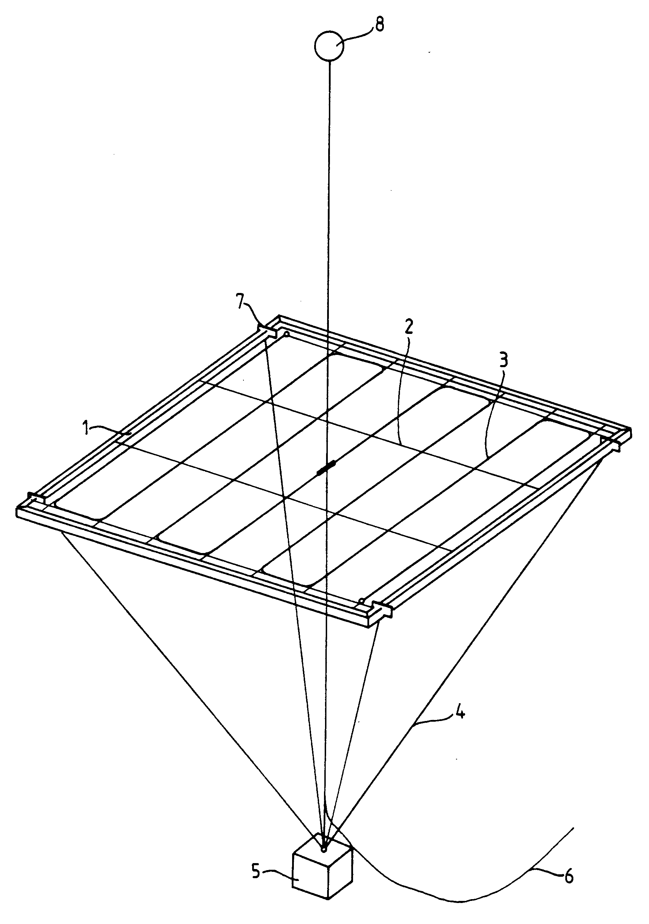

Im folgenden soll die Erfindung anhand eines in der Zeichnung schematisch dargestellten Ausführungsbeispiels näher erläutert werden:

Die Figur zeigt eine im Wasser schwebende Begasungsmatte.

Dichtgeschweißte Hohlprofile aus Stahl bilden einen quadratischen Rahmen 1, der mit Stahlseilen 2 bespannt ist. Auf den Seilen 2 sind Begasungsschläuche 3 parallel verlegt. Auf diese Weise entsteht eine Begasungsmatte, die schwebend im Wasser angeordnet wird. An den Ecken des quadratischen Rahmens 1 sind Stahlseile 4 befestigt, an denen ein Betonquader 5 als Beschwerung hängt. Über eine Zuleitung 6, die ebenfalls beschwert ist, wird Sauerstoff von unten den Begasungsschläuchen zugeführt. Zur Sanierung eines Gewässers wird die Begasungsvorrichtung am Einsatzort im Wasser abgesenkt. Der Betonquader 5 ist so dimensioniert, daß er den durch die Hohlprofile des Rahmens 1 erzeugten Auftrieb zumindest kompensiert. Zweckmäßigerweise ist der Betonquader 5 so schwer, daß er fest am Gewässergrund liegenbleibt und so eine Verankerung des Rahmens bewirkt. Die Länge der Seile 4 ist so gewählt, daß der Rahmen 1 ca. 0.5 bis ca. 1 m über der über dem Gewässergrund liegenden Schlammschicht waagerecht schwebt. Senkrecht über dem Mittelpunkt des quadratischen Rahmens 1 ist an der Gewässeroberfläche eine Markierungsboje 8 angebracht, um die Position der Begasungsmatte feststellen zu können.

Zum Transport kann die Begasungsvorrichtung leicht zerlegt werden. Im vorliegenden Ausführungsbeispiel ist der Rahmen 1 aus vier Teilen zusammengesetzt, die mittels Flanschen 7 miteinander verschraubt sind. Der Betonquader 5 kann von den Seiten 4 gelöst werden, und die Sauerstoffzuleitung 6 kann von den Begasungsschläuchen 3 abgetrennt werden.

## Patentansprüche

1. Vorrichtung zur Begasung von Gewässern mit auf einem Auftriebskörper montierten Begasungselementen, die unterhalb der Gewässeroberfläche angeordnet sind, dadurch gekennzeichnet, daß der Auftriebskörper als Rahmen (1) aus dichtgeschweißten Hohlprofilen ausgebildet ist, der derart mit einer zentralen Beschwerung (5) versehen ist, daß er im Gewässer über dem Gewässerboden schwebt, und die Begasungselemente als Begasungsschläuche (3) ausgebildet sind.

2. Vorrichtung nach Anspruch 1, dadurch gekennzeichnet, daß die Beschwerung (5) auf dem Gewässerboden angeordnet und mit Seilen (4) am Rahmen (1) befestigt ist.

3. Vorrichtung nach einem der Ansprüche 1 oder 2, dadurch gekennzeichnet, daß der Rahmen (1) oberhalb einer auf dem Gewässerboden liegenden Schlammschicht derart angeordnet ist, daß die Begasungsschläuche (3) waagerecht positioniert sind.

## Claims

1. A device for the gas treatment of bodies of water comprising gas treatment elements which are mounted on a buoyant member and which are arranged below the surface of the water body, characterised in that the buoyant member has the form of a frame (1) which is composed of seal-welded hollow profiles and which is provided with a central weighting device (5) in such manner that it floats in the water body above the floor of the water body, and that the gas treatment elements have the form of gas treatment tubes (3).

2. A device as claimed in Claim 1, characterised in that the weighting device (5) is arranged on the floor of the water body and is attached to the frame (1) by cables (4).

3. A device as claimed in one of Claims 1 or 2, characterised in that the frame (1) is arranged above a sludge layer lying on the floor of the water body in such manner that the gas treatment tubes (3) are positioned horizontally.

## Revendications

1. Dispositif d'injection de gaz dans l'eau, comprenant des éléments d'injection de gaz montés sur un corps de sustentation et qui sont disposés au-dessous de la surface de l'eau, caractérisé en ce que le corps de sustentation est réalisé sous la forme d'un cadre (1) en profilés creux soudés de façon étanche et qui est muni d'une masse centrale alourdissante (5) de telle façon qu'il flotte dans l'eau, au-dessus du fond de l'eau et en ce que les éléments d'injection de gaz sont réalisés sous la forme de conduites flexibles (3) d'injection de gaz.

2. Dispositif selon la revendication 1, caractérisé en ce que la masse alourdissante (5) est disposée au fond de l'eau et est fixée au cadre (1) par des câbles (4).

3. Dispositif selon l'une des revendications 1 ou 2 , caractérisé en ce que le cadre (1) est disposé au-dessus d'une couche de vase existant au fond de l'eau, de telle façon que les conduites flexibles (3) d'injection de gaz soient disposées horizontalement.
